# EUROPÄISCHE PATENTSCHRIFT

(11) **EP 0 996 835 B1**
(45) Veröffentlichungstag und Bekanntmachung des Hinweises auf die Patenterteilung: **18.06.2003**
(21) Anmeldenummer: 99934472.4
(22) Anmeldetag: 11.05.1999
(51) Int. Cl.: F16H 59/02

(54) **WÄHLVORRICHTUNG FÜR EIN FAHRZEUGGETRIEBE**
SELECTOR DEVICE FOR THE GEARBOX OF A MOTOR VEHICLE
DISPOSITIF DE SELECTION POUR BOITE DE VITESSES DE VEHICULE

(30) Priorität: 13.05.1998 DE 19821403
(43) Veröffentlichungstag der Anmeldung: 03.05.2000
(73) Patentinhaber: ZF Lemförder Metallwaren AG, 49448 Lemförde (DE)
(72) Erfinder: ERSOY, Metin, D-65396 Walluf (DE)
(86) Internationale Anmeldenummer: DE9901419
(87) Internationale Veröffentlichungsnummer: WO99058881

(56) Entgegenhaltungen:
- WO-A-91/06903
- DE-C- 19 632 254
- GB-A- 518 116
- US-A- 5 161 422
- PATENT ABSTRACTS OF JAPAN vol. 018, no. 363 (M-1635), 8. Juli 1994 (1994-07-08) & JP 06 094110 A (MAZDA MOTOR CORP), 5. April 1994 (1994-04-05) in der Anmeldung erwähnt

## Beschreibung

Die Erfindung betrifft eine Vorrichtung zur elektronischen Anwahl beziehungsweise Steuerung der Schaltstufen eines Fahrzeuggetriebes gemäß dem Oberbegriff des Anspruches 1.

Eine Schaltvorrichtung zur elektronischen Anwahl von Schaltstufen eines Fahrzeuggetriebes mit einem Schaltknauf, der eine Schaltmechanik mit einem Mittel zur Gangwahl aufweist, geht beispielsweise aus der gattungsgemäßen DE 196 32 254 C1 hervor. Das Mittel zur Gangwahl ist bei dieser Lösung um eine Achse drehbar gelagert. Es sind ferner Mittel zur Übersetzung der mechanischen Schaltbewegungen in elektrische Signale sowie Mittel zur Übertragung dieser Signale vorhanden, wobei ein Tragarm, der bei der bekannten Ausführung ein Handbremshebel eines Kraftfahrzeuges ist, zur ortsfesten Positionierung des Schaltknaufes im Fahrzeuginnenraum vorgesehen ist.

Aus der Offenlegungsschrift DE 40 29 330 A1 ist darüber hinaus eine Schaltvorrichtung für ein Kraftfahrzeuggetriebe mit einem in einem Kardangelenk gelagerten Wählhebel, der zum Vorwählen von Getriebegängen in einer ersten an einem Schaltgehäuse ausgebildeten Schaltgasse schwenkbar ist und über eine Quergasse in eine zur ersten Schaltgasse parallele zweite Schaltgasse umschaltbar ist, wobei der Wählhebel in beiden Endlagen der Umschaltbewegung mit einem Rastglied in einer federnden Rastkulisse gehalten ist, wobei die Rastkulisse in einem Rasthebel ausgebildet ist, der an seiner einen Seite drehbar in einer Gelenknabe für den Wählhebel gelagert ist und an seiner anderen Seite durch eine Zugfeder gegen das Rastglied des Wählhebels verspannt ist. Allgemein verfügt also die Schaltvorrichtung über eine Schaltmechanik mit einem Mittel zur Gangwahl und einem Mittel zur Übersetzung der mechanischen Bewegung des Schaltknaufes in einen Schaltbefehl.

Bei diesen gattungsgemäßen Schaltvorrichtungen ergibt sich das Problem, daß eine ergonomisch optimale Positionierung der schaltvorrichtung zwischen den Fahrzeugsitzen oder im Cockpit des Kraftfahrzeuges nur unter Einschränkungen möglich ist, insbesondere wenn sich die Fahrerposition und die Größe des Fahrers individuell unterscheiden.

Es ist technische Problemstellung der Erfindung, eine Schaltvorrichtung zu entwickeln, die eine ergonomisch optimale Schaltung und Positionierung der Schaltvorrichtung bei gleichzeitiger Miniaturisierung ermöglicht.

Diese technische Problemstellung der Erfindung wird durch die Merkmale des Anspruches 1 gelöst

Demgemäß wird die gattungsgemäße Schaltvorrichtung zur elektronischen Anwahl von Schaltstufen eines Fahrzeuggetriebes mit einem Schaltknauf, der eine Schaltmechanik mit einem Mittel zur Gangwahl aufweist, das an dem Schaltknauf um mindestens eine Achse schwenkbar gelagert ist sowie mit einem Mittel zur Übersetzung der mechanischen Schaltbewegungen in optische, elektrische oder hydraulische Signale und einem Mittel zur Übertragung der Signale, wobei ein Tragarm zur ortsfesten Positionierung des Schaltknaufes im Fahrzeuginnenraum vorgesehen ist, dahingehend weiterentwickelt, dass die Schaltmechanik in dem Schaltknauf über ein Kreuzgelenk verfügt und das Mittel zur Gangwahl um zwei Achsen beweglich ist und der Schaltknauf aus einem schwenkbaren Oberteil und einem auf dem Tragarm fixierten Unterteil besteht, wobei das Unterteil eine halbkugelförmige Form aufweist.

Gemäß einer Weiterbildung der erfindungsgemäßen Schaltvorrichtung kann das Oberteil auf seiner Außenseite die Form einer Kugelschale aurweisen.

Darüber hinaus kann, gemäß einer weiteren erfindungsgemäßen Fortbildung, eine Kulisse vorgesehen sein, die eine Führung der Bewegung des Mittels zur Gangwahl bewirkt.

Vorzugsweise weist die Kulisse zwei parallele Schaltgassen und eine Quergasse zur Verbindung der Schaltgassen auf.

Erfindungsgemäß kann die Ausführung des Tragarms so gestaltet sein, daß dieser in sich soweit flexibel ist, daß er in unterschiedlichen Positionen fixierbar ist. Eine weitere Möglichkeit besteht darin, daß der Tragarm um eine Achse schwenkbar und arretierbar vorgesehen ist, beziehungsweise daß der Tragarm an einem Kugelgelenk befestigt ist, das zur Positionierung des Tragarmes frei beweglich ist und nach der Positionierung des Tragarmes festgestellt werden kann.

In einer besonderen Ausführungsform ist das Mittel zur Übersetzung der mechanischen Bewegung auf einen elektrischen, beziehungsweise elektronischen Schaltbefehl mit Hilfe eines Hall-Gebers. Eine andere Ausführungsform für das Mittel zur Übersetzung der mechanischen Bewegung kann darin bestehen, daß ein Mikro-Schalter oder ein optischer Sensor vorgesehen ist. Alternativ ist es auch möglich, daß das Mittel zur Übersetzung der mechanischen Bewegung über einen Anschluß an ein Hydrauliksystem verfügt und mit diesem Mittel hydraulische Ventile geöffnet oder geschlossen werden und/oder Schalter betätigt werden.

Zur Übertragung dieser Signale zur Getriebesteuerung kann auch eine elektrische Verdrahtung, optische Fasern oder eine hydraulische Leitung dienen. Auch eine drahtlose Übertragung mit Hilfe von Infrarot, Ultraschall oder Mikrowellen ist realisierbar.

Gemäß einer weiteren Fortbildung der Erfindung ist der Schaltknauf vom Tragarm abnehmbar ausgeführt. Hierdurch ist es möglich eine einfache Version einer Diebstahlsicherung zu verwirklichen. In einer verbesserten Variante dieser Ausführungsform kann schaltknaufseitig und/oder fahrzeugseitig je ein Transponder vorgesehen sein, der dafür sorgt, daß die Übertragung der Schaltimpulse nur mit entsprechend zueinander beziehungsweise zur Elektronik des Fahrzeug passenden, codierten Signalen möglich ist. Beim Einbau eines codierenden Transponders besteht auch die Möglichkeit, daß das Fehlen des Transponders eine Wegfahrsperre in der Elektronik des Fahrzeuges auslöst.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnungen.

Die Erfindung soll nun anhand der nachfolgenden Ausführungsbeispiele und den Zeichnungen näher erläutert werden.

Es zeigen im einzelnen:
- Figur 1:: Schaltvorrichtung auf Tragarm;
- Figur 2:: Schaltvorrichtung auf flexiblem Tragarm;
- Figur 3:: Schaltvorrichtung auf Tragarm mit Gelenk.

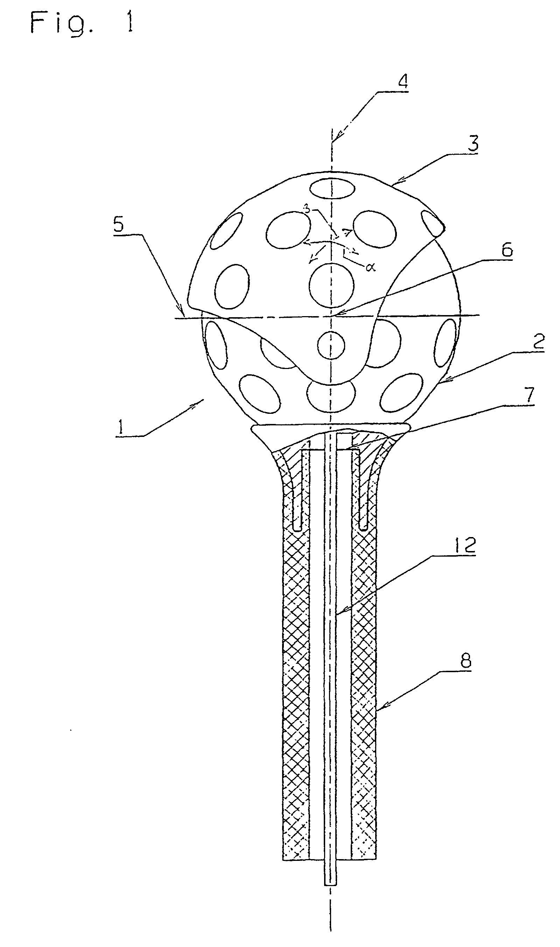

Die Figur 1 zeigt eine erfindungsgemäße Ausführungsform einer Schaltvorrichtung zur elektronischen Anwahl, beziehungsweise zur Steuerung von Schaltstufen eines Fahrzeuggetriebes mit einem Schaltknauf 1, der über eine Schaltmechanik verfügt, wobei die Mittel zur Gangwahl, beispielsweise durch Hall-Geber, Opto-Sensor oder auch Mikro-Schalter, realisiert sein können. Der Schaltknauf 1 besteht aus einem Unterteil 2 und einem Oberteil 3, wobei das Unterteil 2 auf einem Tragarm 8 fixiert ist. Das Unterteil 2 hat eine etwa halbkugelförmige Form, in dessen Mittelpunkt 6 ein in der Figur 1 nicht dargestelltes Kreuzgelenk vorgesehen ist, an dem wiederum das Oberteil 3 der Schaltmechanik befestigt ist. Das Oberteil 3 ist über das Kreuzgelenk in zwei Ebenen um die Winkel α und β schwenkbar, wobei ein Verschwenken in der Ebene des Winkels α die gewünschten Schaltvorgänge hervorruft. Ein Verschwenken des Oberteils 3 in der Ebene des Winkels β ermöglicht die Wahl einer vorbestimmten Schaltgasse. Das Oberteil 3 hat in der gezeigten Ausführungsform ebenfalls auf seiner Außenseite die Form einer Kugelschale, kann jedoch in besonderen anderen Ausführungsformen auch "Joy-Stick"-artig ausgeführt werden, bei dem jedoch erfindungsgemäß nur der Knauf, nicht aber der Tragarm zum Eingeben der Schaltbefehle bewegt werden muß.

In der dargestellten Variante der Figur 1 verfügt die Schaltvorrichtung über eine elektrische oder optische Verbindung 12, mit der die Schaltimpulse, die durch die Schaltmechanik erzeugt werden, an ein Getriebe weitergegeben werden können. Der Schaltknauf 1 ist abnehmbar mit dem Tragarm 8 verbunden, so daß ein einfaches Entfernen der Schaltmechanik eine gewisse Diebstahlssicherung für das Fahrzeug ergibt. Vorzugsweise kann die Verbindung zwischen dem Tragarm 8 und dem Schaltknauf über einen Bajonettverschluß erfolgen, jedoch kann auch eine besondere Verschlußvorrichtung, die über einen Schlüssel zu ver- und entriegeln ist, verwendet werden. Zusätzlich ist es möglich im Schaltknauf 1 ein Transponder einzusetzen, der die Schaltimpulse entsprechend codiert und an das Fahrzeug weitergibt, beziehungsweise der auch bei jedem Abnehmen mit einem neuen Code versehen wird, so daß ein Bewegen des Fahrzeuges nur mit genau diesem, zuvor abgenommenen, Schaltknauf ermöglicht wird.

In der dargestellten Form der Figur 1 verfügt die Schaltvorrichtung über einen starren Tragarm 8. Dieser Tragarm kann erfindungsgemäß auch teleskopartig ausgestaltet werden, so daß die Höhe des Schaltknaufes variabel bleibt. Ebenso ist es möglich, die Position des Schaltknaufes dadurch zu verändern, daß der Tragarm 8 auf einer Schiene montiert wird, so daß seine Position in Fahrtrichtung entsprechend den ergonomischen Erfordernissen der Sitzposition des Fahrers angepaßt werden kann. Auch ist es möglich, eine Zwangsverbindung zwischen der Positionierung des Fahrersitzes und der Position sowohl in Höhe als auch in Längsrichtung, des Schaltknaufes zu erzeugen.

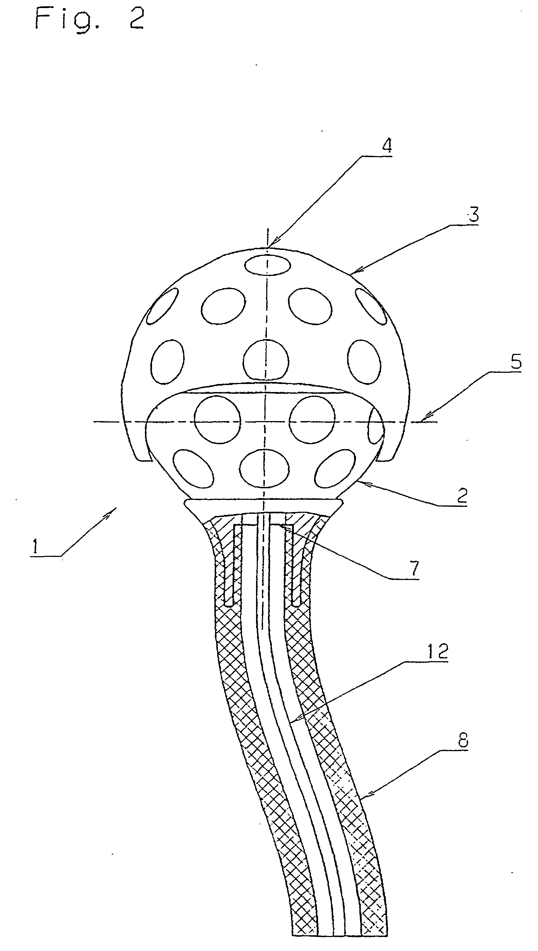

In der Figur 2 ist ein Schaltknauf 1 entsprechend der Figur 1 dargestellt, wobei jedoch der Tragarm 8 in einer flexiblen Ausführung dargestellt ist.

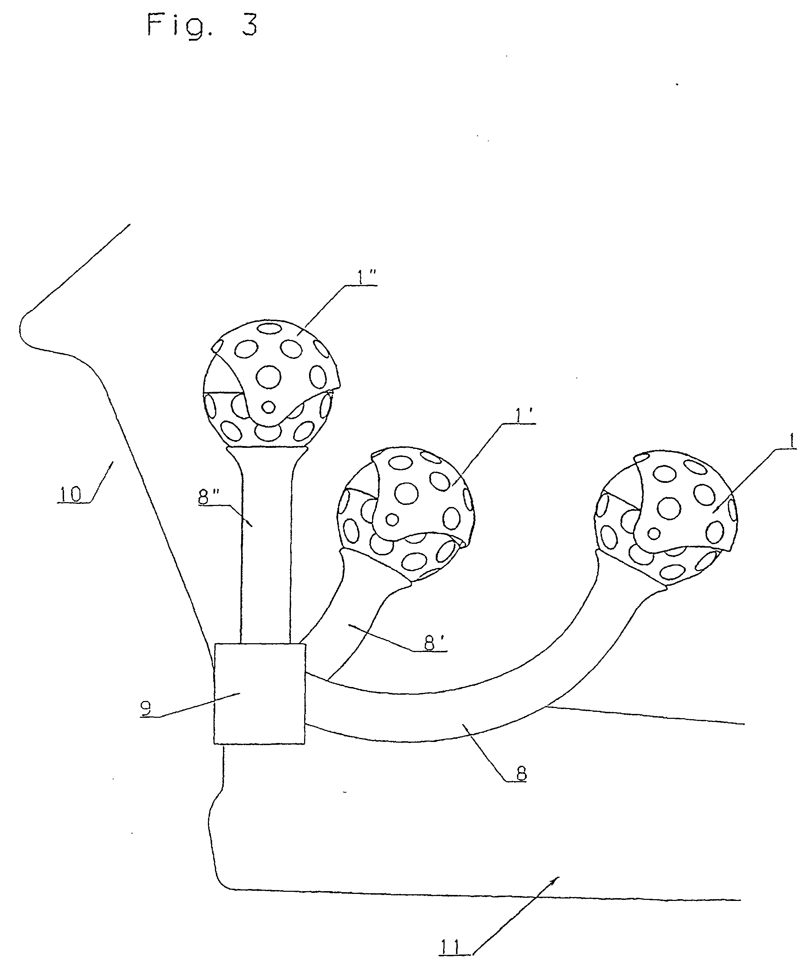

Die Figur 3 zeigt ebenefalls einen Schaltknauf 1, 1', 1" in drei verschiedenen Positionen an einem flexiblen Tragarm 8, der an der Frontseite des Cockpits 10 fixiert ist. Erfindungsgemäß kann der Tragarm 8 auch über ein Gelenk 9 verfügen, so daß ein Verschwenken des Tragarmes 8 in die unterschiedlichen, ergonomisch günstigen Positionen ermöglicht wird. Auch hierbei ist eine Koppelung des Verstellmechanismus der Schaltvorrichtung mit dem Verstellmechanismus des Fahrersitzes in Längsrichtung, beziehungsweise mit der Höhenverstellung des Fahrersitzes, möglich. Außerdem ist auch eine Kombination von Teleskoparm und Gelenk für den Tragarm 8 möglich.

Insgesamt ergibt sich mit den erfindungsgemäßen Ausführungsformen einer Schaltvorrichtung eine problemlose und einfache Anpassungsmöglichkeit der Positionierung der Schaltvorrichtung im Cockpit an die ergonomischen Voraussetzungen unterschiedlicher Fahrer.

### Bezugszeichenliste:

- 1: Schaltknauf
- 2: Unterteil
- 3: Oberteil
- 4: erste Drehachse
- 5: zweite Drehachse
- 6: Mittelpunkt
- 7: Trennschnitt
- 8: Tragarm
- 9: Gelenk
- 10: Cockpit
- 11: Konsole
- 12: elektrische, optische oder hydraulische Verbindung

## Patentansprüche

1. Schaltvorrichtung zur elektronischen Anwahl von Schaltstufen eines Fahrzeuggetriebes mit einem Schaltknauf(1), der eine Schaltmechanik mit einem Mittel (3) zur Gangwahl aufweist, das an dem Schaltknauf (1) um mindestens eine Achse (4) schwenkbar gelagert ist sowie einem Mittel zur Übersetzung der mechanischen Schaltbewegungen in optische, elektrische oder hydraulische Signale und einem Mittel (12) zur Übertragung der Signale, wobei der Schaltknauf (1) das obere Ende eines Tragarmes (8) bildet, und wobei ein Tragarm (8) zur ortsfesten Positionierung des Schaltknaufes (1) im Fahrzeuginnenraum vorgesehen ist, **dadurch gekennzeichnet, dass** das Mittel zur Gaugwahlt ein Oberteil (3) des Schaltknaufs (1) ist und die Schaltmechanik in dem Schaltknauf (1) über ein Kreuzgelenk verfügt und dieses Oberteil (3) zur Gangwahl um zwei Achsen (4, 5) beweglich ist und der Schaltknauf aus diesem schwenkbaren Oberteil (3) und einem auf dem Tragarm (8) fixierten Unterteil (2) besteht, wobei das Unterteil (2) eine halbkugelförmige Form aufweist.

2. Schaltvorrichtung gemäß Anspruch 1, **dadurch gekennzeichnet, dass** das Oberteil (3) auf seiner Außenseite die Form einer Kugelschale aufweist.

3. Schaltvorrichtung gemäß Anspruch 2, **dadurch gekennzeichnet, daß** eine Kulisse zur Führung der Bewegung des Mittels (3) zur Gangwahl vorhanden ist.

4. Schaltvorrichtung gemäß einem der Ansprüche 1-3, **dadurch gekennzeichnet, daß** der Tragarm (8) in sich flexibel ausgeführt ist.

5. Schaltvorrichtung gemäß einem der Ansprüche 1-4, **dadurch gekennzeichnet, daß** der Tragarm (8) um eine Achse schwenkbar und arretierbar ist.

6. Schaltvorrichtung gemäß einem der Ansprüche 1 - 5, **dadurch gekennzeichnet, daß** das Mittel zur Übersetzung der mechanischen Schaltbewegung in elektrische und / oder optische und / oder hydraulische Signale Sensoren zur Übersetzung der mechanischen Schaltbewegungen auf elektrische und / oder optische und / oder hydraulische Signale beinhaltet.

7. Schaltvorrichtung gemäß einem der Ansprüche 1-6, **dadurch gekennzeichnet, daß** als Mittel zur Übersetzung einer mechanischen Bewegung auf einen elektrischen beziehungsweise elektronischen Schaltbefehl ein oder mehrere Hall-Geber vorgesehen ist.

8. Schaltvorrichtung gemäß einem der Ansprüche 1-7, **dadurch gekennzeichnet, daß** als Mittel zur Übersetzung einer mechanischen Bewegung auf einen elektrischen beziehungsweise elektronischen Schaltbefehl ein oder mehrere Mikro-Schalter vorgesehen ist.

9. Schaltvorrichtung gemäß einem der Ansprüche 1-8, **dadurch gekennzeichnet, daß** als Mittel zur Übersetzung einer mechanischen Bewegung auf einen elektrischen beziehungsweise elektronischen Schaltbefehl ein optischer Sensor vorgesehen ist.

10. Schaltvorrichtung gemäß einem der Ansprüche 1-9, **dadurch gekennzeichnet, daß** zur Übertragung der elektronischen Signale mindestens eine Kabelverbindungen (12) vorgesehen ist.

11. Schaltvorrichtung gemäß einem der Ansprüche 1-9, **dadurch gekennzeichnet, daß** zur Übertragung der optischen Signale mindestens eine Glasfaser vorgesehen ist.

12. Schaltvorrichtung gemäß einem der Ansprüche 1-9, **dadurch gekennzeichnet, daß** zur Übertragung der hydraulischen Flüsse mindestens eine Schlauchleitung vorgesehen ist.

13. Schaltvorrichtung gemäß einem der Ansprüche 1-9, **dadurch gekennzeichnet, daß** die Übertragung der Schaltbefehle mit Infrarot, Ultraschall oder Mikrowellen erfolgt.

14. Schaltvorrichtung gemäß einem der Ansprüche 1-13, **dadurch gekennzeichnet, daß** der Schaltknauf (1) vom Tragarm (8) abnehmbar ausgeführt ist.

15. Schaltvorrichtung gemäß einem der Ansprüche 1-14, **dadurch gekennzeichnet, daß** schaltknaufseitig und fahrzeugseitig je eine aufeinander abgestimmte Codierung vorgesehen ist, so daß die Übertragung der Schaltimpulse nur mit zueinander passenden Transpondern möglich ist.

16. Schaltvorrichtung gemäß Anspruch 15, **dadurch gekennzeichnet, daß** das Fehlen des Transponders eine Wegfahrsperre des Fahrzeugs auslöst.

## Claims

1. Selection device for the electronic selection of selection stages of a vehicle transmission, having a selection knob (1) that has a selection mechanism having a means (3) for gear selection that is mounted on the selection knob (1) so as to be pivotable around at least one axis (4), and also a means for converting the mechanical selection movements into optical, electrical or hydraulic signals and a means (12) for the transmission of the signals, wherein the selection knob (1) forms the upper end of a supporting arm (8), and wherein a supporting arm (8) is provided for the fixed positioning of the selection knob (1) in the vehicle interior, **characterized in that** the means for gear selection is an upper section (3) of the selection knob and the selection mechanism in the selection knob (1) has a universal joint and said upper section (3) for gear selection is movable about two axes (4, 5) and the selection knob comprises said pivotable upper section (3) and a lower section (2) fixed on the supporting arm (8), wherein the lower section (2) has a hemispherical shape.

2. Selection device according to Claim 1, **characterized in that** the upper section (3) has the shape of a spherical dish on its outside.

3. Selection device according to Claim 2, **characterized in that** a connecting link is provided for guiding the movement of the means (3) for gear selection.

4. Selection device according to any of Claims 1-3, **characterized in that** the supporting arm (8) is in itself of flexible construction.

5. Selection device according to any of Claims 1-4, **characterized in that** the supporting arm (8) can be pivoted around an axis and locked.

6. Selection device according to any of Claims 1-5, **characterized in that** the means for the conversion of the mechanical selection movement into electrical and/or optical and/or hydraulic signals contains sensors for converting the mechanical selection movements into electrical and/or optical and/or hydraulic signals.

7. Selection device according to any of Claims 1-6, **characterized in that** one or more Hall-effect sensors is/are provided as means for converting a mechanical movement into an electrical or electronic selection command.

8. Selection device according to any of Claims 1-7, **characterized in that** one or more microswitches is/are provided as means for converting a mechanical movement into an electrical or electronic selection command.

9. Selection device according to any of Claims 1-8, **characterized in that** an optical sensor is provided as means for converting a mechanical movement into an electrical or electronic selection command.

10. Selection device according to any of Claims 1-9, **characterized in that** at least one cable connection (12) is provided for transmitting the electronic signals.

11. Selection device according to any of Claims 1-9, **characterized in that** at least one glass fibre is provided for transmitting the optical signals.

12. Selection device according to any of Claims 1-9, **characterized in that** at least one hose line is provided for transmitting the hydraulic flows.

13. Selection device according to any of Claims 1-9, **characterized in that** the selection commands are transmitted by infrared, ultrasound or microwaves.

14. Selection device according to any of Claims 1-13, **characterized in that** the selection knob (1) is constructed so as to be detachable from the supporting arm (8).

15. Selection device according to any of Claims 1-14, **characterized in that** on the selection-knob side and vehicle side a mutually matched code is provided in each case so that the transmission of the selection pulses is possible only with mutually matching transponders.

16. Selection device according to Claim 15, **characterized in that** the absence of the transponder sets up a barrier to the vehicle being driven off.

## Revendications

1. Dispositif de sélection pour la sélection électronique des rapports d'une boîte de vitesses d'un véhicule automobile avec un bouton de sélection (1), qui comprend un mécanisme de changement de vitesse englobant un moyen (3) pour la sélection des rapports, qui est logé sur le bouton de sélection (1) de manière à pouvoir pivoter autour d'au moins un axe (4), ainsi qu'avec un moyen pour transposer les mouvements de sélection mécaniques en signaux optiques, électriques ou hydrauliques et un moyen (12) pour la transmission des signaux, le bouton de sélection (1) formant l'extrémité supérieure d'un bras porteur (8) et un bras porteur (8) pour le positionnement à poste fixe du bouton de sélection (1) étant prévu dans l'habitacle du véhicule, **caractérisé en ce que** le moyen pour la sélection des rapports est une partie supérieure (3) du bouton de sélection, **en ce que** le mécanisme de changement de vitesse dispose dans le bouton de sélection (1) d'une articulation à croisillon, **en ce que** pour la sélection des rapports cette partie supérieure (3) est mobile autour de deux axes (4, 5) et **en ce que** le bouton de sélection se compose de cette partie supérieure (3) et d'une partie inférieure (2) fixée sur le bras porteur (8), la partie inférieure (2) ayant une forme de demi sphère.

2. Dispositif de sélection selon la revendication 1, **caractérisé en ce que** sur son côté extérieur la partie supérieure (3) a la forme d'une coquille sphérique.

3. Dispositif de sélection selon la revendication 2, **caractérisé en ce qu'**il existe une coulisse pour le guidage du mouvement du moyen (3) pour la sélection des rapports.

4. Dispositif de sélection selon l'une des revendications 1-3, **caractérisé en ce que** le bras porteur (8) est réalisé d'une manière souple en soi.

5. Dispositif de sélection selon l'une des revendications 1-4, **caractérisé en ce que** le bras porteur (8) peut être pivoté et bloqué autour d'un axe.

6. Dispositif de sélection selon l'une des revendications 1-5, **caractérisé en ce que** le moyen pour la transposition du mouvement de sélection mécanique en signaux électriques et/ou optiques et/ou hydrauliques comprend des capteurs pour la transposition des mouvements de sélection mécaniques en signaux électriques et/ou optiques et/ou hydrauliques.

7. Dispositif de sélection selon l'une des revendications 1-6, **caractérisé en ce qu'**un ou plusieurs transmetteur(s) à effet hall est(sont) prévu(s) comme moyen(s) pour la transposition d'un mouvement mécanique en une instruction de commande électrique ou électronique.

8. Dispositif de sélection selon l'une des revendications 1-7, **caractérisé en ce qu'**un ou plusieurs microcommutateur(s) est(sont) prévu(s) comme moyen(s) pour la transposition d'un mouvement mécanique en une instruction de commande électrique ou électronique.

9. Dispositif de sélection selon l'une des revendications 1-8, **caractérisé en ce qu'**un capteur optique est prévu comme moyen pour la transposition d'un mouvement mécanique en une instruction de commande électrique ou électronique.

10. Dispositif de sélection selon l'une des revendications 1-9, **caractérisé en ce qu'**au moins une liaison par câble (12) est prévue pour la transmission des signaux électroniques.

11. Dispositif de sélection selon l'une des revendications 1-9, **caractérisé en ce qu'**au moins une fibre de verre est prévue pour la transmission des signaux optiques.

12. Dispositif de sélection selon l'une des revendications 1-9, **caractérisé en ce qu'**au moins une conduite par tuyau souple est prévue pour la transmission des flux hydrauliques.

13. Dispositif de sélection selon l'une des revendications 1-9, **caractérisé en ce que** la transmission des instructions de commande a lieu par infrarouges, par ultrasons ou par micro-ondes.

14. Dispositif de sélection selon l'une des revendications 1-13, **caractérisé en ce que** le bouton de sélection (1) est réalisé de manière à pouvoir être enlevé du bras porteur (8).

15. Dispositif de sélection selon l'une des revendications 1-14, **caractérisé en ce que** du côté du bouton de sélection et du côté du véhicule il est prévu respectivement un codage, qui sont accordés entre eux, de sorte que la transmission des impulsions de changement de vitesse n'est possible qu'avec des transpondeurs accordés entre eux.

16. Dispositif de sélection selon la revendication 15, **caractérisé en ce que** l'absence du transpondeur déclenche un blocage du démarrage du véhicule.
